# EUROPEAN PATENT APPLICATION

(11) **EP 4 664 280 A1**
(43) Date of publication of application: **17.12.2025**
(21) Application number: 24841947.5
(22) Date of filing: 11.03.2024
(51) Int. Cl.: G06F 9/451, H04N 21/431, H04N 21/485

(54) **IMAGE DISPLAY METHOD, IMAGE DISPLAY APPARATUS AND ELECTRONIC DEVICE**

(30) Priority: 18.07.2023 CN 202310883194
(71) Applicant: Huawei Technologies Co., Ltd., Shenzhen, Guangdong 518129 (CN)
(72) Inventor: WANG, Qi, Shenzhen, Guangdong 518129 (CN); LU, Wei, Shenzhen, Guangdong 518129 (CN); XU, Yuqiong, Shenzhen, Guangdong 518129 (CN); SHI, Guoquan, Shenzhen, Guangdong 518129 (CN); NIE, Shiyue, Shenzhen, Guangdong 518129 (CN); LING, Kang, Shenzhen, Guangdong 518129 (CN); ZHOU, Huan, Shenzhen, Guangdong 518129 (CN)
(74) Representative: Maiwald GmbH
(86) International application number: PCT/CN2024/080962
(87) International publication number: WO 2025/015944

(57) **Abstract**

Embodiments of this application provide an image display method, an image display apparatus, and an electronic device. The method may be applied to the field of electronic devices. The method includes: obtaining a first window and a second window on a first interface, where the first window is a focus window, and the second window is a non-focus window; drawing the first window in a first frame buffer, and drawing the second window in a second frame buffer, where the first window and the second window are drawn by a process of an operating system; compositing the first frame buffer through a first hardware interface layer to obtain a first composite frame, and compositing the second frame buffer through a second hardware interface layer to obtain a second composite frame; and controlling, based on the first composite frame and the second composite frame, a display apparatus to display a second interface. According to the foregoing method, in a heavy-load scenario, it can be ensured that a focus window is preferentially visible, and occurrence of lagging and freezing of the focus window is reduced.

## Description

This application claims priority to Chinese Patent Application No. 202310883194.3, filed with the China National Intellectual Property Administration on July 18, 2023 and entitled "IMAGE DISPLAY METHOD, IMAGE DISPLAY APPARATUS, AND ELECTRONIC DEVICE", which is incorporated herein by reference in its entirety.

### TECHNICAL FIELD

Embodiments of this application relate to the field of electronic devices, and more specifically, to an image display method, an image display apparatus, and an electronic device.

### BACKGROUND

As various intelligent devices such as a mobile phone, a tablet computer, and a personal computer (personal computer, PC) are iteratively updated, major software vendors constantly upgrade applications, animation effect of the applications is increasingly complex, and drawing load of graphics display increases accordingly. Especially in use scenarios of the PC and the tablet computer, rendering load of a plurality of windows and applications is increasingly heavy. Therefore, an optimization technology for such a technology also emerges. For example, rendering technologies such as partial refreshing and occlusion culling can effectively alleviate repeated drawing of a redundant window in a heavy-load scenario.

However, when the foregoing technologies are applied in the heavy-load scenario, a focus window still lags or freezes when a user operates the focus window. Therefore, how to ensure that the focus window is preferentially visible and reduce occurrence of lagging and freezing of the focus window in the heavy-load scenario is an urgent problem to be resolved.

### SUMMARY

Embodiments of this application provide an image display method, an image display apparatus, and an electronic device, to ensure that a focus window is preferentially visible, and reduce occurrence of lagging and freezing of the focus window in a heavy-load scenario.

According to a first aspect, an image display method is provided. The method includes: obtaining a first window and a second window on a first interface, where the first window is a focus window, and the second window is a non-focus window; drawing the first window in a first frame buffer, and drawing the second window in a second frame buffer, where the first window and the second window are drawn by a process of an operating system; compositing the first frame buffer through a first hardware interface layer to obtain a first composite frame, and compositing the second frame buffer through a second hardware interface layer to obtain a second composite frame; and controlling, based on the first composite frame and the second composite frame, a display apparatus to display a second interface.

Optionally, the first window and the second window on the first interface may be stacked. For example, a z-order (z-order) of the first window is higher than a z-order of the second window.

Optionally, the first interface may further include a third window. The third window may be a mouse and/or a system user interface (user interface, UI) window. During window drawing, the first window and the third window may be drawn in the first frame buffer.

Optionally, the first interface may include one second window, or may include a plurality of second windows. When the first interface includes the plurality of second windows, all of the plurality of second windows may be drawn in the second frame buffer during window drawing.

Optionally, the image display method may be applied to an intelligent device such as a mobile phone, a tablet computer, or a personal computer. During image display, the first window may be a window corresponding to an application 1 of the intelligent device, and the second window may be a window corresponding to an application 2 of the intelligent device.

Optionally, drawing a window in a frame buffer may be understood as follows: in a graphics rendering procedure, drawing visible content of the window in the frame buffer. The frame buffer may be a memory area for storing image data. The first frame buffer and the second frame buffer may be understood as two different memory areas for storing image data, and have different memory addresses.

Optionally, the process of the operating system may be a rendering service process, and the rendering service process may be used to receive a rendering task sent by each application, convert the rendering task into a command that can be executed by a GPU, and perform data transmission with a CPU, to implement efficient graphics rendering and window drawing.

It should be understood that a name of the rendering service process is merely an example for description. Any process that can be used to draw the first window and the second window in the operating system may be understood as the rendering service process in this application.

Optionally, compositing a frame buffer through a hardware interface layer may be understood as follows: The hardware interface layer combines and processes pixel data in the frame buffer, to generate a final display frame (for example, the first composite frame and the second composite frame). The display frame may be displayed on the display apparatus. Therefore, compositing the first frame buffer through the first hardware interface layer may be understood as follows: The first hardware interface layer processes pixel data corresponding to the first window in the first frame buffer. When the first interface includes the first window and the third window, compositing the first frame buffer through the first hardware interface layer may be understood as follows: The first hardware interface layer processes pixel data corresponding to the first window and the third window in the first frame buffer.

According to the image display method provided in this embodiment of this application, window rendering efficiency and user experience can be improved. Specifically, in this embodiment of this application, a focus window is drawn in the first frame buffer, and a non-focus window is drawn in the second frame buffer. This window drawing manner helps avoid drawing all windows in a same frame buffer, thereby avoiding lagging or impact of a rendering procedure of the non-focus window on drawing of the focus window. In addition, the first frame buffer is composited through the first hardware interface layer, and the second frame buffer is composited through the second hardware interface layer. This composition manner ensures preferential visibility of the focus window. Even if the non-focus window lags or freezes, drawing and rendering procedures of the focus window are not affected.

With reference to the first aspect, in some implementations of the first aspect, compositing the first frame buffer through the first hardware interface layer to obtain the first composite frame, and compositing the second frame buffer through the second hardware interface layer to obtain the second composite frame include: compositing the first frame buffer at a first frame rate through the first hardware interface layer, to obtain the first composite frame; and compositing the second frame buffer at a second frame rate through the second hardware interface layer, to obtain the second composite frame, where the second frame rate is less than or equal to the first frame rate.

Optionally, the first frame rate may be 60 frames per second (frames per second, FPS), and the second frame rate may be less than or equal to 60 FPS.

In this embodiment of this application, when drawing load of the non-focus window is heavy, the second hardware interface layer may composite the second frame buffer at a low second frame rate, and the first hardware interface layer may always composite the first frame buffer at a high first frame rate. In this way, when the drawing load of the non-focus window is heavy, the system can preferentially ensure a rendering and composition frame rate of the focus window. Because the first frame buffer is composited through the first hardware interface layer and is operated at a high frame rate, rendering and display of the focus window are not affected by the drawing load of the non-focus window. In addition, the second hardware interface layer composites the second frame buffer at a low frame rate. In this way, drawing pressure of the non-focus window can be alleviated, and it is ensured that rendering and interaction of the focus window can be continuously and smoothly performed.

With reference to the first aspect, in some implementations of the first aspect, the first composite frame includes a frame composited by the first hardware interface layer in an (N+1)^{th} frame, and the second composite frame includes a frame composited by the second hardware interface layer in an N^{th} frame, where N is a positive integer; and controlling, based on the first composite frame and the second composite frame, the display apparatus to display the second interface includes: when a frame rate at which the second hardware interface layer performs composition in the (N+1)^{th} frame is less than or equal to a preset threshold, controlling, based on the frame composited by the first hardware interface layer in the (N+1)^{th} frame and the frame composited by the second hardware interface layer in the N^{th} frame, the display apparatus to display the second interface.

Optionally, that the frame rate at which the second hardware interface layer composites the second frame buffer is less than the preset threshold may be understood as follows: When the non-focus window is rendered and composited, load of an electronic device is heavy, resulting in lagging.

Optionally, the preset threshold is 60 FPS, or the preset threshold is 30 FPS.

In this embodiment of this application, when the second hardware interface layer composites the second frame buffer in the (N+1)^{th} frame, if lagging occurs, the second hardware interface layer may send the composite frame in the N^{th} frame to the display apparatus for display, and the first hardware interface layer still sends the composite frame in the (N+1)^{th} frame to the display apparatus for display. This processing manner can ensure that the display apparatus can correctly display the second interface when the non-focus window lags. Specifically, the second hardware interface layer sends the composite frame in the N^{th} frame to the display apparatus for display, so that a user can still view latest visible content when the non-focus window lags during rendering of the non-focus window, and pictures are not lagging. In addition, the first hardware interface layer still sends the composite frame in the (N+1)^{th} frame to the display apparatus for display. This means that continuity and smoothness of rendering and display of the focus window can still be maintained, and rendering and display of the focus window are not affected by lagging of the non-focus window. The user may continue to interact with the focus window, and an operation response speed of the focus window is not significantly reduced.

With reference to the first aspect, in some implementations of the first aspect, obtaining the first window and the second window on the first interface includes: detecting, on the first interface, a first input for the first window; and obtaining the first window and the second window in response to the first input.

Optionally, the first input may be moving or scaling the first window.

In this embodiment of this application, when the user operates the focus window, the electronic device may obtain the first window and the second window, to perform subsequent layered drawing and rendering operations. In this way, the electronic device can avoid impact of displacement and a size change of the focus window on a dirty region on the first interface, thereby avoiding fluctuation of a rendering frame rate of the focus window. This manner ensures a drawing priority of the focus window, and improves an operation response and visual effect during user interaction.

With reference to the first aspect, in some implementations of the first aspect, the method further includes: detecting, on the second interface, a second input for the second window; in response to the second input, drawing the second window in the first frame buffer, and drawing the first window in the second frame buffer; compositing the first frame buffer through the first hardware interface layer to obtain a third composite frame, and compositing the second frame buffer through the second hardware interface layer to obtain a fourth composite frame; and controlling, based on the third composite frame and the fourth composite frame, the display apparatus to display a third interface.

Optionally, the second input may be moving or scaling the second window. When the second input for the second window is detected, the second window is switched to a focus window, and the first window is switched to a non-focus window.

In this embodiment of this application, when detecting that the user operates the second window, the electronic device may draw the second window in the first frame buffer, and draw the first window in the second frame buffer. In this way, when the user operates the second window, the electronic device can ensure preferential visibility of the second window, and occurrence of lagging and freezing of the second window is reduced. In addition, the user can more smoothly interact with a window of interest, thereby improving user experience and real-time responsiveness to an operation.

According to a second aspect, an image display apparatus is provided. The apparatus includes: an obtaining unit, configured to obtain a first window and a second window on a first interface, where the first window is a focus window, and the second window is a non-focus window; and a processing unit, configured to: draw the first window in a first frame buffer, and draw the second window in a second frame buffer, where the first window and the second window are drawn by a process of an operating system; composite the first frame buffer through a first hardware interface layer to obtain a first composite frame, and composite the second frame buffer through a second hardware interface layer to obtain a second composite frame; and control, based on the first composite frame and the second composite frame, a display apparatus to display a second interface.

With reference to the second aspect, in some implementations of the second aspect, the processing unit is specifically configured to: composite the first frame buffer at a first frame rate through the first hardware interface layer, to obtain the first composite frame; and composite the second frame buffer at a second frame rate through the second hardware interface layer, to obtain the second composite frame, where the second frame rate is less than or equal to the first frame rate.

With reference to the second aspect, in some implementations of the second aspect, the first composite frame includes a frame composited by the first hardware interface layer in an (N+1)^{th} frame, and the second composite frame includes a frame composited by the second hardware interface layer in an N^{th} frame, where N is a positive integer; and the processing unit is specifically configured to: when a frame rate at which the second hardware interface layer performs composition in the (N+1)^{th} frame is less than or equal to a preset threshold, control, based on the frame composited by the first hardware interface layer in the (N+1)^{th} frame and the frame composited by the second hardware interface layer in the N^{th} frame, the display apparatus to display the second interface.

With reference to the second aspect, in some implementations of the second aspect, the processing unit is further configured to detect, on the first interface, a first input for the first window; and the obtaining unit is specifically configured to obtain the first window and the second window in response to the first input.

With reference to the second aspect, in some implementations of the second aspect, the processing unit is further configured to: detect, on the second interface, a second input for the second window; in response to the second input, draw the second window in the first frame buffer, and draw the first window in the second frame buffer; composite the first frame buffer through the first hardware interface layer to obtain a third composite frame, and composite the second frame buffer through the second hardware interface layer to obtain a fourth composite frame; and control, based on the third composite frame and the fourth composite frame, the display apparatus to display a third interface.

According to a third aspect, a rendering method is provided. The method includes: obtaining first information sent by a CPU, where the first information includes a first window and a second window, the first window is a focus window, and the second window is a non-focus window; a processing unit, configured to draw the first window in a first frame buffer, and draw the second window in a second frame buffer, where the first window and the second window are drawn by a process of an operating system; and a transceiver unit, configured to send data in the first frame buffer and the second frame buffer to a hardware composer.

According to a fourth aspect, a rendering apparatus is provided. The apparatus includes: an obtaining unit, configured to obtain first information sent by a CPU, where the first information includes a first window and a second window, the first window is a focus window, and the second window is a non-focus window; a processing unit, configured to: draw the first window in a first frame buffer, and draw the second window in a second frame buffer, where the first window and the second window are drawn by a process of an operating system; and a transceiver unit, configured to send data in the first frame buffer and the second frame buffer to a hardware composer.

According to a fifth aspect, an image display apparatus is provided. The apparatus includes at least one processor and a memory. The at least one processor is coupled to the memory, and is configured to read and execute instructions in the memory, to enable the apparatus to implement the method in any implementation of the first aspect.

According to a sixth aspect, a computer-readable storage medium is provided. The computer-readable storage medium stores program code, and when the computer program code is run on a computer, the computer is enabled to perform the method in any implementation of the first aspect or the third aspect.

According to a seventh aspect, a chip is provided. The chip includes a circuit, and the circuit is configured to perform the method in any implementation of the first aspect or the third aspect.

According to an eighth aspect, a computer program product is provided. The computer product includes a computer program. When the computer program is run, a computer is enabled to perform the method in any implementation of the first aspect or the third aspect.

According to a ninth aspect, an electronic device is provided, including the apparatus in any implementation of the second aspect or the fourth aspect.

### BRIEF DESCRIPTION OF DRAWINGS

FIG. 1 is a diagram of a hardware structure of an electronic device applicable to embodiments of this application;
FIG. 2 is a diagram of a split rendering architecture according to an embodiment of this application;
FIG. 3 is a system architecture to which an image display method is applicable according to an embodiment of this application;
FIG. 4 is a schematic flowchart of an image display method according to an embodiment of this application;
FIG. 5(a), FIG. 5(b), and FIG. 5(c) are scenarios to which an image display method is applicable according to an embodiment of this application;

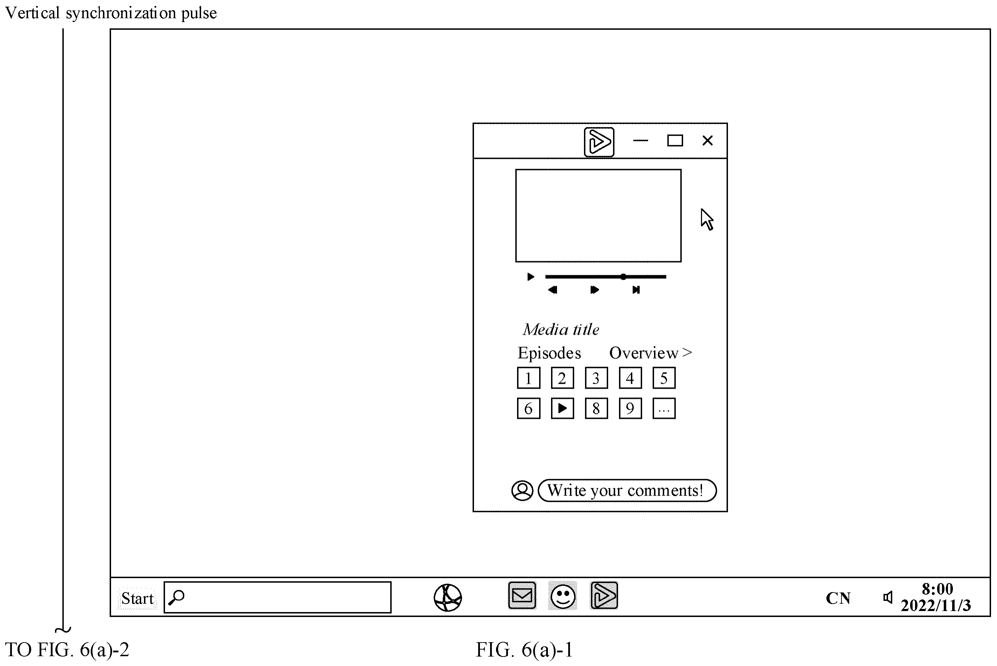

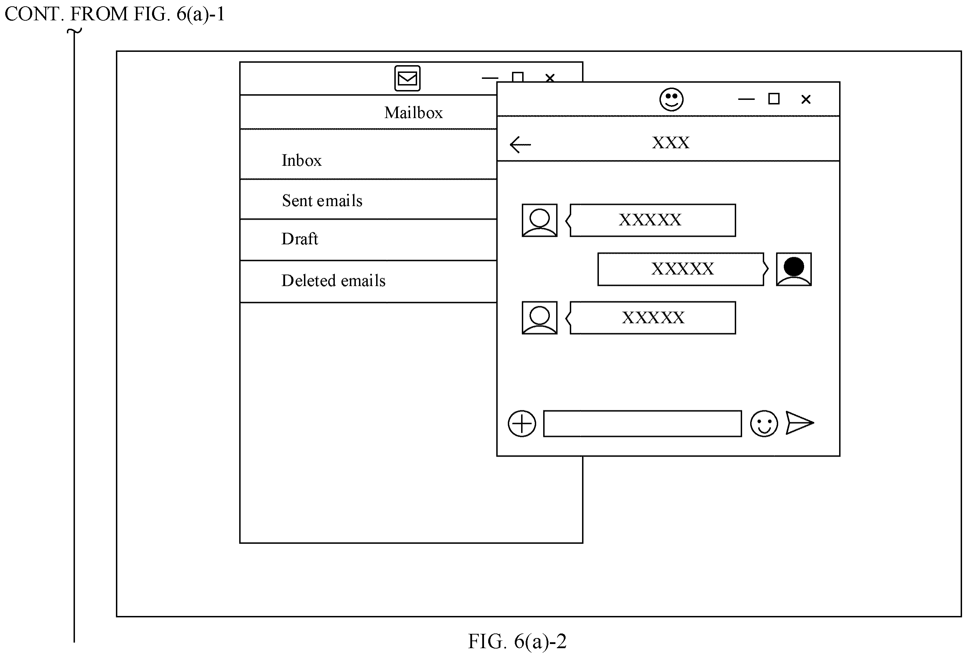

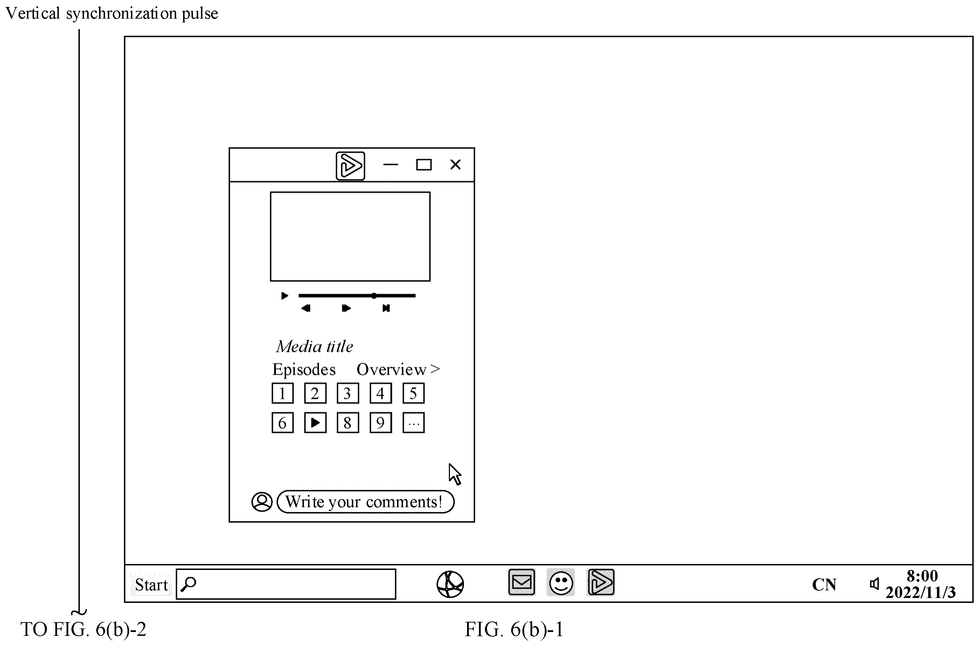

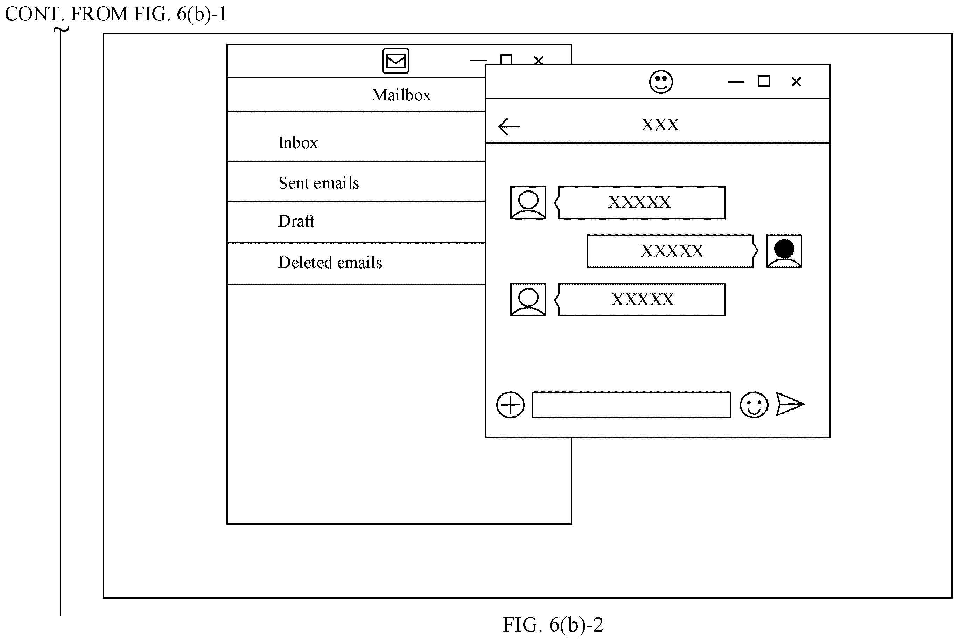

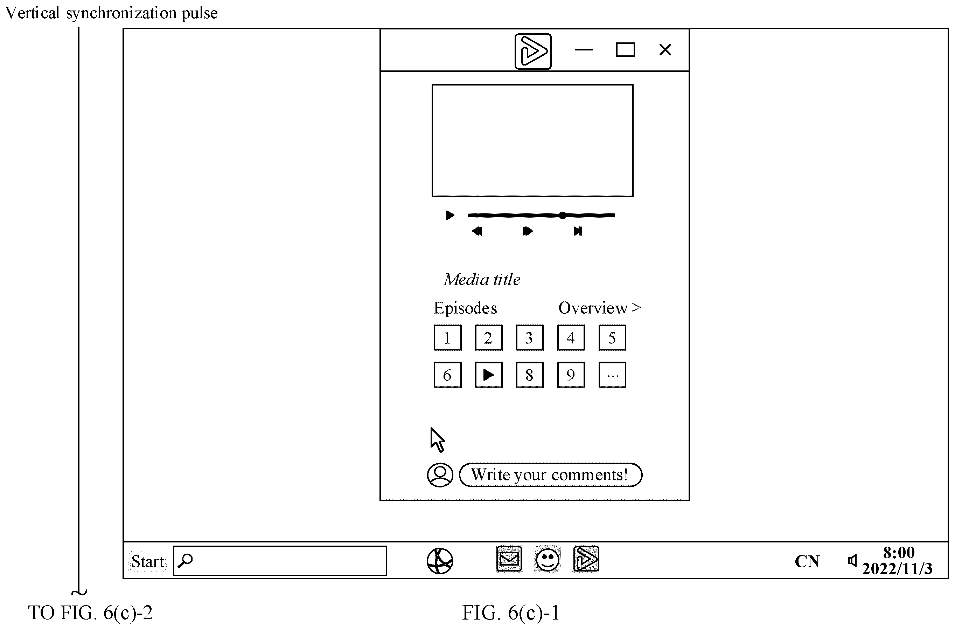

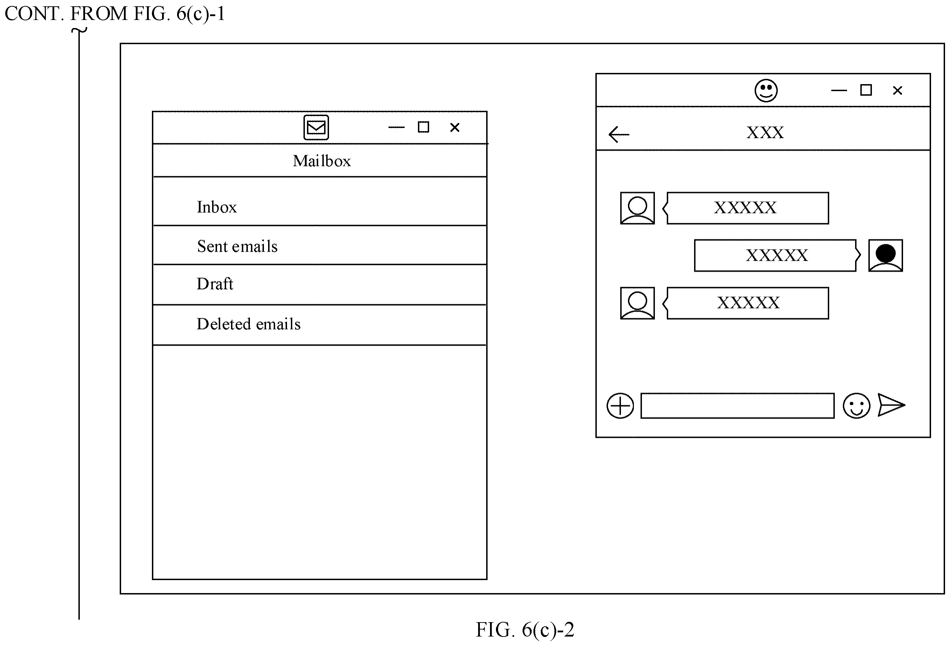

FIG. 6(a)-1, FIG. 6(a)-2, FIG. 6(b)-1, FIG. 6(b)-2, FIG. 6(c)-1, and FIG. 6(c)-2 are diagrams of independently drawing a focus layer and a non-focus layer at different frame rates according to an embodiment of this application;

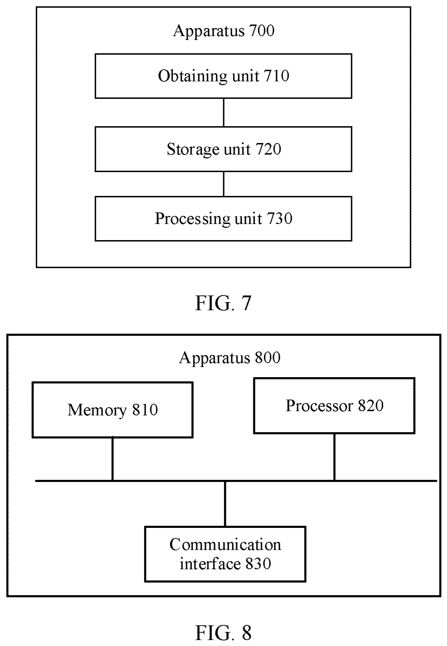

FIG. 7 is a diagram of an apparatus according to an embodiment of this application; and
FIG. 8 is a diagram of another apparatus according to an embodiment of this application.

### DESCRIPTION OF EMBODIMENTS

The following describes technical solutions of embodiments in this application with reference to accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

A method provided in embodiments of this application is applied to an electronic device, and the electronic device includes but is not limited to a mobile phone, a tablet computer, a vehicle-mounted device, a wearable device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart screen, and another electronic device having a display. A specific type of the electronic device is not limited in embodiments of this application.

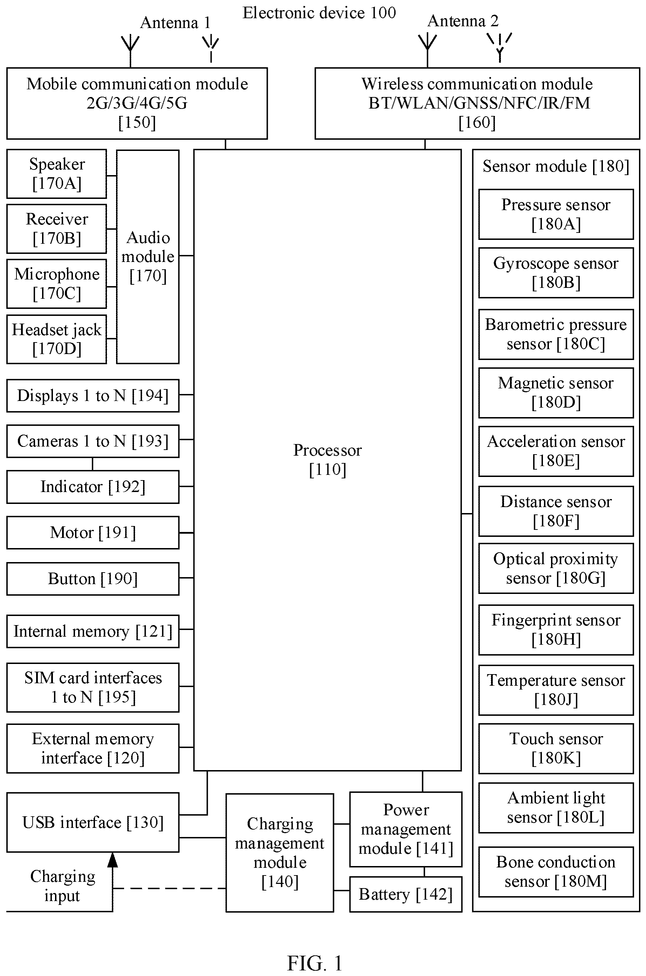

For example, FIG. 1 is a diagram of a hardware structure of an electronic device according to embodiments of this application.

As shown in FIG. 1, an electronic device 100 may include a processor 110, a memory 120, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a camera 191, a display 192, a button 193, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory, to avoid repeated access. This reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

For example, the processor 110 and a touch sensor 180E may communicate with each other through the I2C bus interface, to implement a touch function of the electronic device 100. The processor 110 and the camera 191 may communicate with each other through the CSI interface, to implement a photographing function of the electronic device 100. The processor 110 and the display 192 may communicate with each other through the DSI interface, to implement a display function of the electronic device 100.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The wireless communication module 160 may provide a wireless communication solution applied to the electronic device 100, and the wireless communication solution includes a solution for a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement the display function through the GPU, the display 192, the application processor, and the like. The GPU is a microprocessor for image processing, and is connected to the display 192 and the application processor. The GPU is configured to: perform mathematical and geometric computation, and render an image. The processor 110 may include one or more GPUs that execute program instructions to generate or change display information.

The display 192 is configured to display an image, a video, and the like. The display 192 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 192, where N is a positive integer greater than 1.

The electronic device 100 may implement the photographing function through the ISP, the camera 191, the video codec, the GPU, the display 192, the application processor, and the like. The ISP is configured to process data fed back by the camera 191. The camera 191 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. In some embodiments, the electronic device 100 may include one or N cameras 191, where N is a positive integer greater than 1.

The memory 120 is configured to store data and/or instructions.

The memory 120 may include an internal memory. The internal memory is configured to store computer-executable program code, and the executable program code includes the instructions. The processor 110 performs various function applications and data processing of the electronic device 100 by running the instructions stored in the internal memory. The internal memory may include a program storage area and a data storage area. The program storage area may store an operating system. The program storage area may further store one or more applications (for example, Gallery or Contacts), and the like. The data storage area may store data (for example, an image or a contact) or the like created during use of the electronic device 100. In addition, the internal memory may include a high-speed random access memory, and may further include a non-volatile memory, for example, one or more disk storage devices, a flash device, or a universal flash storage (universal flash storage, UFS). In some embodiments, the processor 110 may run the instructions stored in the internal memory and/or the instructions stored in the memory disposed in the processor 110, to enable the electronic device 100 to perform a card sharing method provided in embodiments of this application.

The memory 120 may further include an external memory, for example, a micro SD card, to extend a storage capability of the electronic device 100. The external memory may communicate with the processor 110 through an external memory interface, to implement a data storage function. For example, files such as music and videos are stored in the external memory.

It should be understood that, in this embodiment of this application, a type of a sensor included in the sensor module 180 is not limited. The sensor module 180 may include more or fewer sensors. This may be specifically determined based on an actual requirement. Details are not described herein.

It may be understood that the structure shown in this embodiment of this application does not constitute a specific limitation on the electronic device. In some other embodiments of this application, the electronic device may include more or fewer components than those shown in the figure, some components may be combined, some components may be split, or different component arrangements may be used. The components shown in the figure may be implemented as hardware, software, or a combination of software and hardware.

The following describes, by using an example in which the electronic device 100 is an intelligent device, a technical problem that needs to be resolved in this application and a technical solution used in this application.

As various intelligent devices such as a mobile phone, a tablet computer, and a PC are iteratively updated, major software vendors constantly upgrade applications, animation effect of the applications is increasingly complex, and drawing load of graphics display increases accordingly. Especially in use scenarios of the PC and the tablet computer, rendering load of a plurality of windows and applications is increasingly heavy. Therefore, an optimization technology for such a technology also emerges. For example, rendering technologies such as partial refreshing and occlusion culling can effectively alleviate repeated drawing of a redundant window in a heavy-load scenario. Partial refreshing may be understood as follows: In split rendering, each window has a layer of the window, and an intelligent device may record a drawing area of each window, and redraw only an area that needs to be updated, thereby reducing content of window drawing. Occlusion culling may be understood as follows: In split rendering, the intelligent device may remove an invisible window from a drawing list, to reduce a quantity of drawn windows.

However, when the foregoing technologies are applied in the heavy-load scenario, a focus window still lags or freezes when a user operates the focus window.

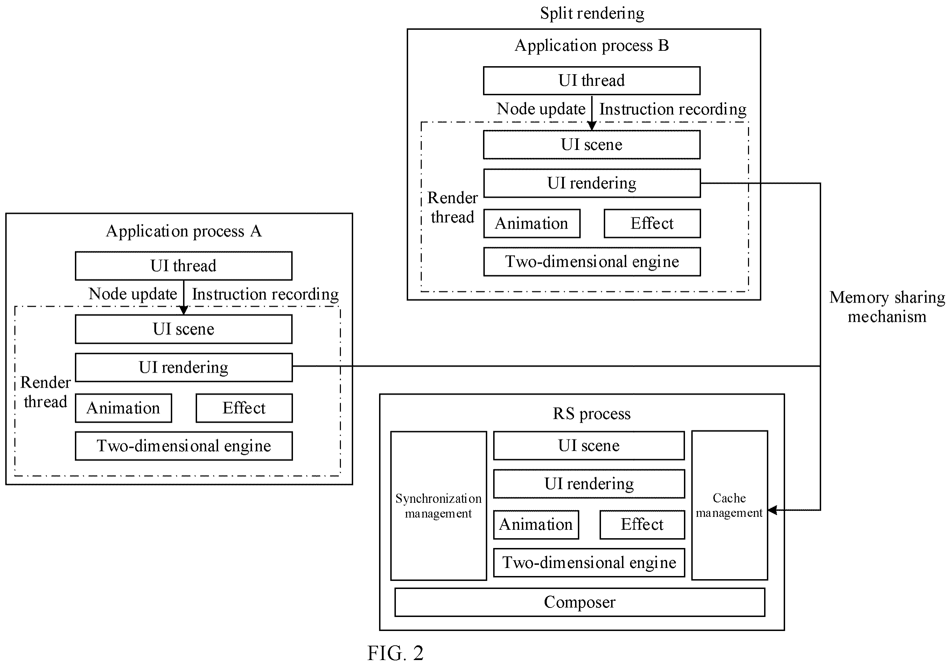

For example, in a split rendering architecture shown in FIG. 2, each application (application, APP) may independently draw a window, and send a drawing result to a rendering service process, and after converting a format of received data, the rendering service process may transmit the data to a video RAM of a GPU for processing by the GPU. In a heavy-load scenario with a plurality of windows and applications, in the architecture, occlusion culling may be performed on an occluded window, that is, the occluded window may not be rendered, thereby improving rendering efficiency to some extent. However, in the architecture, for a multi-window scene (for example, 40 windows) or a typical scenario of a window operation (for example, moving and scaling), after the foregoing processing, a frame rate of a focus window is still lower than 60 FPS, that is, the focus window still lags or freezes when the user operates the focus window. This severely affects interaction experience of the user.

For another example, a unified rendering architecture may be used to replace the split rendering architecture in FIG. 2. Compared with split rendering, unified rendering changes original logic of separately rendering an application process, unified rendering may integrate different types of rendering tasks into a unified rendering framework, and in the unified rendering architecture, the application process may directly send a rendering instruction to a rendering service (render service) process of an operating system (operating system, OS) for unified rendering processing. Therefore, the unified rendering architecture can provide a more flexible rendering procedure and higher rendering efficiency, and can also reduce development and maintenance costs. However, in the unified rendering architecture, all windows are drawn in a same frame buffer (framebuffer), a displacement and a size change of a focus window directly affect occlusion culling benefits a lower-layer non-focus window, and a dirty region (dirty region, DR) of an entire screen also changes. As a result, a drawing refresh rate of the focus window fluctuates, that is, the focus window lags or freezes when the user operates the focus window. This severely affects interaction experience of the user.

It should be understood that the dirty region is introduced to reduce a requirement of rendering on computer performance. When each frame is drawn, only a changed part is drawn. This saves a large amount of rendering resources in software.

Embodiments of this application provide an image display method, an image display apparatus, and an electronic device, to ensure that a focus window is preferentially visible, and reduce occurrence of lagging and freezing of the focus window in a heavy-load scenario.

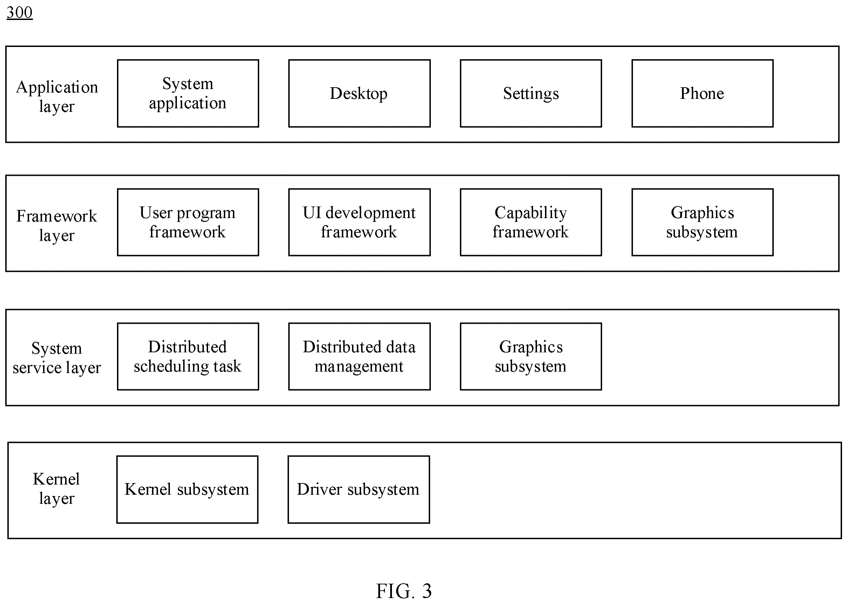

FIG. 3 is a system architecture to which an image display method is applicable according to an embodiment of this application. The system architecture may be applied to the electronic device 100 in FIG. 1.

As shown in FIG. 3, the system architecture 300 includes an application layer, a framework layer, a system service layer, and a kernel layer. Each layer has a clear role and task. Layers may communicate with each other through a software interface.

The application layer may provide a network interface for an application, so that the application directly provides a service for a user. The application layer may include a series of applications, for example, a system application, Desktop, Settings, and Phone. The framework layer may provide an application programming interface (application programming interface, API) and a programming framework for the applications at the application layer. The framework layer may include some predefined functions. As shown in FIG. 2, the framework layer may include a user program framework, a UI development framework, a capability framework, and a graphics subsystem. A rendering service component in the graphics subsystem may perform the image display method provided in embodiments of this application. The system service layer may implement scheduling and data management of a rendering task. The system service layer may include a distributed scheduling module, a distributed management module, and a graphics subsystem. The kernel layer may be an intermediate layer between software and hardware, may transfer a request of an application to hardware, and act as an underlying driver to address various devices and components in the system. The hardware layer may include a kernel subsystem and a driver subsystem.

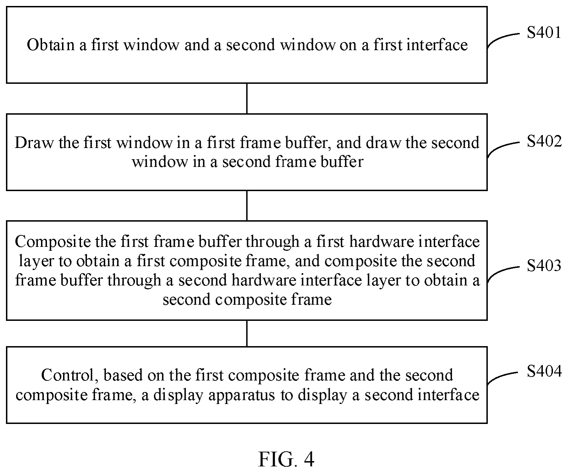

FIG. 4 is a schematic flowchart of an image display method according to an embodiment of this application. The method 400 may be performed by the electronic device 100. When the method 400 is performed by the electronic device 100, the method 400 may be performed by the processor 110 in the electronic device 100. The method 400 may include step S401 to step S404.

S401: Obtain a first window and a second window on a first interface.

The first window is a focus window, and the second window is a non-focus window.

Optionally, the first window and the second window on the first interface may be stacked. For example, a z-order of the first window is higher than a z-order of the second window.

Optionally, the first interface may further include a third window. The third window may be a mouse and/or a system user interface (user interface, UI) window. During window drawing, the first window and the third window may be drawn in a first frame buffer.

Optionally, the first interface may include one second window, or may include a plurality of second windows. When the first interface includes the plurality of second windows, all of the plurality of second windows may be drawn in a second frame buffer during window drawing.

Optionally, the image display method may be applied to an intelligent device such as a mobile phone, a tablet computer, or a personal computer. During image display, the first window may be a window corresponding to an application 1 of the intelligent device, and the second window may be a window corresponding to an application 2 of the intelligent device.

It should be understood that the focus window may be a window that is currently interacting with a user, and the window is responsible for receiving a key event and a touch event. When a new activity (activity) is started, a new window is added, an old window is removed, or screen splitting or restoration from screen splitting is performed, a focus window may be updated. The non-focus window may be a window that is currently in an inactive state or a window that does not interact with the user currently.

In an embodiment, step S401 includes: detecting, on the first interface, a first input for the first window; and obtaining the first window and the second window in response to the first input. In this way, when the user operates the first window, the electronic device may perform the method 400.

Optionally, the first input may be moving or scaling the first window.

S402: Draw the first window in the first frame buffer, and draw the second window in the second frame buffer.

Optionally, drawing a window in a frame buffer may be understood as follows: in a graphics rendering procedure, drawing visible content of the window in the frame buffer. The frame buffer may be a memory area for storing image data, and is configured to: temporarily store rendered image data, and then send the rendered image data to a display apparatus for display. The first frame buffer and the second frame buffer may be understood as two different memory areas for storing image data, and have different memory addresses.

The first window and the second window are drawn by a process of an operating system.

Optionally, the process of the operating system may be a rendering service process, and the rendering service process may receive a rendering task sent by each application, convert the rendering task into a command that can be executed by a GPU, and perform data transmission with a CPU, to implement efficient graphics rendering and window drawing.

It should be understood that a name of the rendering service process is merely an example for description. Any process that can draw the first window and the second window in the operating system may be understood as the rendering service process in this application.

S403: Composite the first frame buffer through a first hardware interface layer to obtain a first composite frame, and composite the second frame buffer through a second hardware interface layer to obtain a second composite frame.

In a window drawing procedure, a hardware interface layer may be an interface between the operating system or a window manager and underlying hardware, and is configured to send drawn image data to the display apparatus for display. Specifically, the hardware interface layer may be responsible for communicating with graphics hardware (for example, a graphics card or an integrated graphics card), and transferring the drawn image data to the display apparatus.

In an embodiment, step S403 includes: compositing the first frame buffer at a first frame rate through the first hardware interface layer, to obtain the first composite frame; and compositing the second frame buffer at a second frame rate through the second hardware interface layer, to obtain the second composite frame, where the second frame rate is less than or equal to the first frame rate. In this way, when drawing load of the non-focus window is heavy, the system can preferentially ensure a rendering and composition frame rate of the focus window. Because the first frame buffer is composited through the first hardware interface layer and is operated at a high frame rate, rendering and display of the focus window are not affected by drawing load of the non-focus window. In addition, the second hardware interface layer composites the second frame buffer at a low frame rate. In this way, drawing pressure of the non-focus window can be alleviated, and it is ensured that rendering and interaction of the focus window can be continuously and smoothly performed.

For example, the first frame rate may be 60 FPS, and the second frame rate may be less than or equal to 60 FPS.

Optionally, compositing a frame buffer through a hardware interface layer may be understood as follows: The hardware interface layer combines and processes pixel data in the frame buffer, to generate a final display frame (for example, the first composite frame and the second composite frame). The display frame may be displayed on the display apparatus. Therefore, compositing the first frame buffer through the first hardware interface layer may be understood as follows: The first hardware interface layer processes pixel data corresponding to the first window in the first frame buffer. When the first interface includes the first window and the third window, compositing the first frame buffer through the first hardware interface layer may be understood as follows: The first hardware interface layer processes pixel data corresponding to the first window and the third window in the first frame buffer.

In an embodiment, the first composite frame includes a frame composited by the first hardware interface layer in an (N+1)^{th} frame, and the second composite frame includes a frame composited by the second hardware interface layer in an N^{th} frame, where N is a positive integer. Step S403 includes: when a frame rate at which the second hardware interface layer performs composition in the (N+1)^{th} frame is less than or equal to a preset threshold, controlling, based on the frame composited by the first hardware interface layer in the (N+1)^{th} frame and the frame composited by the second hardware interface layer in the N^{th} frame, the display apparatus to display a second interface. This processing manner can ensure that the display apparatus can correctly display the second interface when the non-focus window lags. Specifically, the second hardware interface layer sends the composite frame in the N^{th} frame to the display apparatus for display, so that the user can still view latest visible content when the non-focus window lags during rendering of the non-focus window, and pictures are not lagging. In addition, the first hardware interface layer still sends the composite frame in the (N+1)^{th} frame to the display apparatus for display. This means that continuity and smoothness of rendering and display of the focus window can still be maintained, and rendering and display of the focus window are not affected by lagging of the non-focus window. The user may continue to interact with the focus window, and an operation response speed of the focus window is not significantly reduced.

Optionally, that the frame rate at which the second hardware interface layer composites the second frame buffer is less than the preset threshold may be understood as follows: When the non-focus window is rendered and composited, load of the electronic device is heavy, resulting in lagging.

Optionally, the preset threshold is 60 FPS, or the preset threshold is 30 FPS.

S404: Control, based on the first composite frame and the second composite frame, the display apparatus to display the second interface.

Alternatively, step S404 may be replaced with sending a first instruction to the display apparatus, where the first instruction is used to instruct the display apparatus to display the first composite frame and the second composite frame.

According to the image display method provided in embodiments of this application, window rendering efficiency and user experience can be improved. Specifically, in embodiments of this application, the focus window is drawn in the first frame buffer, and the non-focus window is drawn in the second frame buffer. This window drawing manner helps avoid drawing all windows in a same frame buffer, thereby avoiding lagging or impact of a rendering procedure of the non-focus window on drawing of the focus window. In addition, the first frame buffer is composited through the first hardware interface layer, and the second frame buffer is composited through the second hardware interface layer. This composition manner ensures preferential visibility of the focus window. Even if the non-focus window lags or freezes, drawing and rendering procedures of the focus window are not affected.

Optionally, when the method 400 is performed by the processor, steps S401, S403, and S404 may be performed by a CPU, and step S402 may be performed by a GPU.

In the method 400, if window switching occurs, the electronic device may identify a new focus window, draw the new focus window in the first frame buffer, and then perform a subsequent composition operation.

In an embodiment, the method 400 further includes: detecting, on the second interface, a second input for the second window; in response to the second input, drawing the second window in the first frame buffer, and drawing the first window in the second frame buffer; compositing the first frame buffer through the first hardware interface layer to obtain a third composite frame, and compositing the second frame buffer through the second hardware interface layer to obtain a fourth composite frame; and controlling, based on the third composite frame and the fourth composite frame, the display apparatus to display a third interface. In this way, when detecting that the user operates the second window, the electronic device may draw the second window in the first frame buffer, and draw the first window in the second frame buffer. In this way, when the user operates the second window, the electronic device can ensure preferential visibility of the second window, and occurrence of lagging and freezing of the second window is reduced. In addition, the user can more smoothly interact with a window of interest, thereby improving user experience and real-time responsiveness to an operation.

Optionally, the second input may be moving or scaling the second window. When the second input for the second window is detected, the second window is switched to a focus window, and the first window is switched to a non-focus window.

It should be understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

It should be further understood that, for different application scenarios, some steps may be performed in the method 400, or some performed steps may be correspondingly changed.

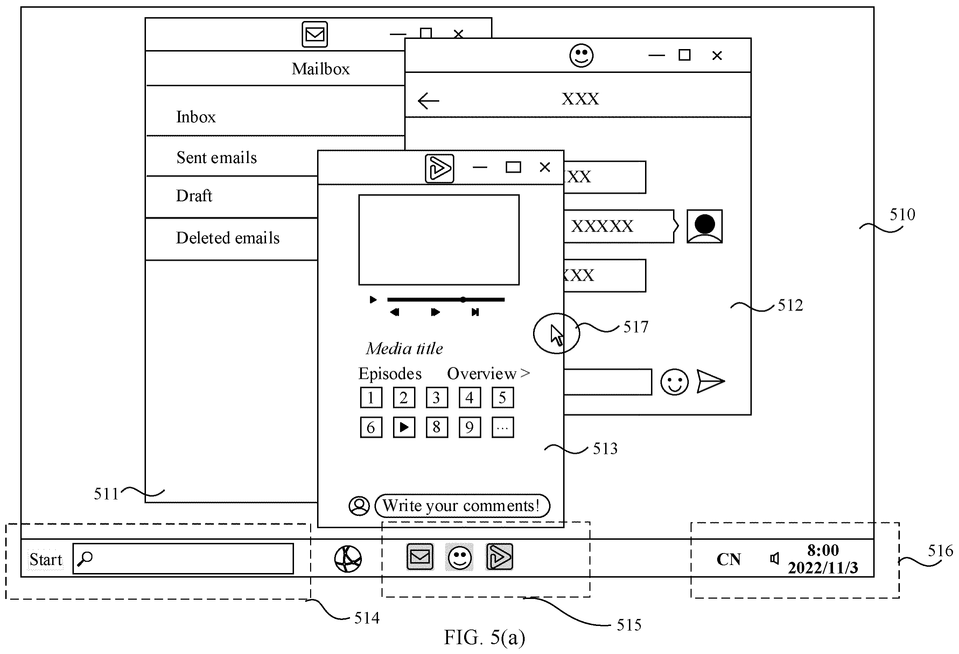

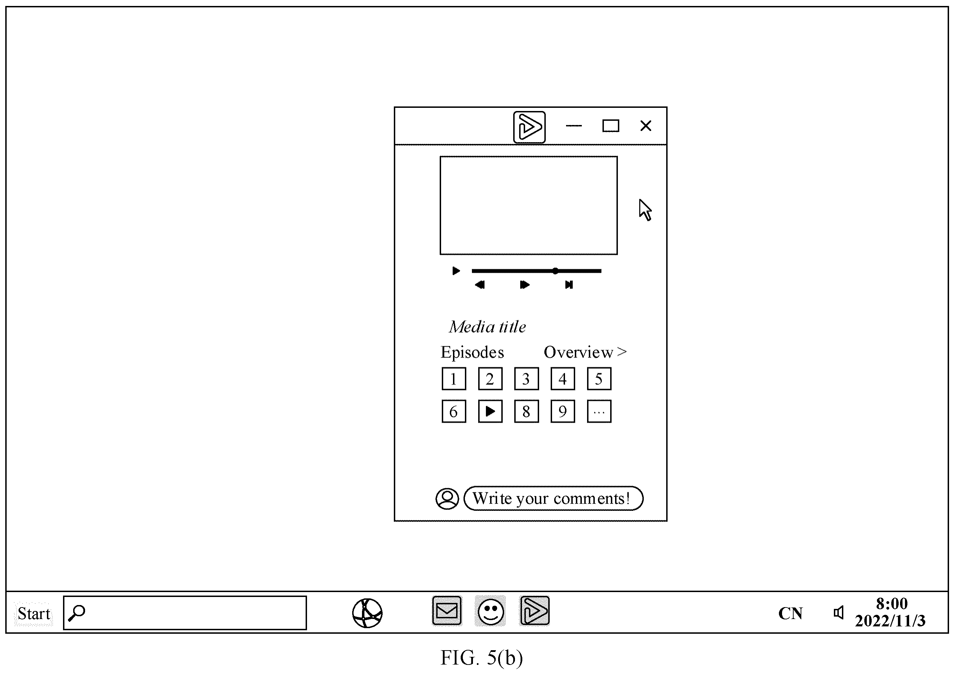

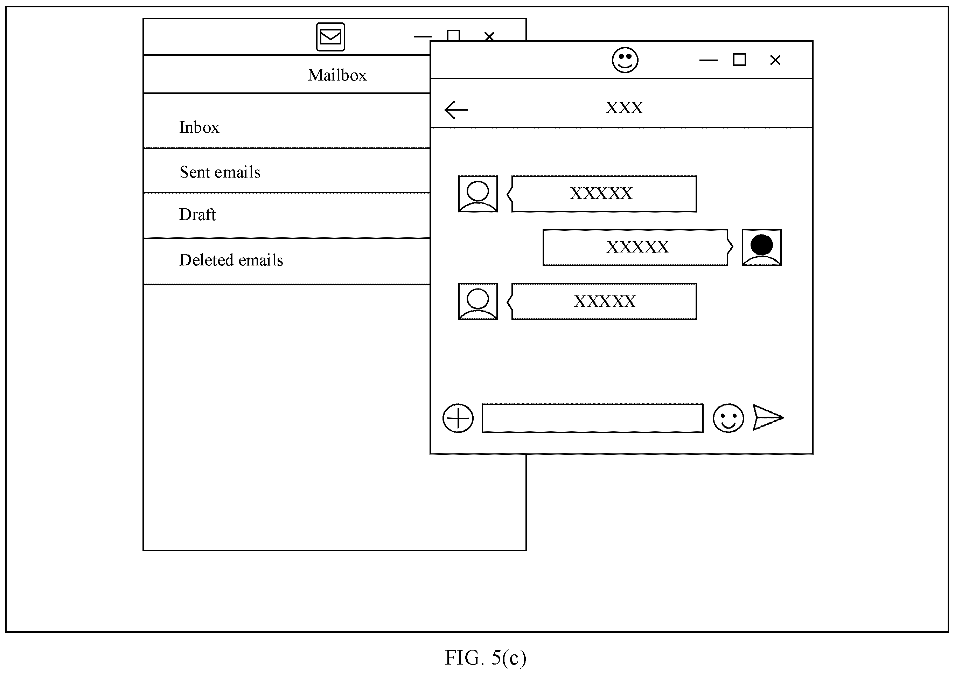

FIG. 5(a), FIG. 5(b), and FIG. 5(c) are scenarios to which an image display method is applicable according to an embodiment of this application. The method 400 may be applicable to this scenario.

As shown in FIG. 5(a), a window 511 of an email application is at a bottom layer, a window 512 of a chat application is at a middle layer, and a window 513 of a video application is at a top layer. A stacking relationship between all windows on a user interface may be described by using a z-order. It is assumed that a z-order of the window 513 of the video application is z₃, a z-order of the window 512 of the chat application is z₂, and a z-order of the window 511 of the email application is z₁. z₃>z₂>z₁, and a window with a higher z-order is displayed closer to an upper part of a display interface.

The window 513 of the video application may be referred to as a focus window, and the window 513 of the video application may be the first window in the method 400. The window 511 of the email application and the window 512 of the chat application may be referred to as non-focus windows or windows whose z-orders are lower than that of the focus window, and the window 511 of the email application and the window 512 of the chat application may be second windows in the method 400. In addition, a window whose z-order is higher than that of the focus window may be further defined, and the window whose z-order is higher than that of the focus window may include a start and search box 514, an app icon 515, a display interface 516, and a mouse 517. These windows may be third windows in the method 400.

When a window is drawn by using the method 400, a focus window and a window whose z-order is higher than that of the focus window may be composited into a first hardware interface layer (which may also be referred to as a focus layer and correspond to FIG. 5(b)); and a non-focus window and a window whose z-order is lower than that of the focus window are composited into a second hardware interface layer (which may also be referred to as a non-focus layer and correspond to FIG. 5(c)). The focus window is drawn in a first frame buffer, and the non-focus window is drawn in a second frame buffer. Then, the first frame buffer is composited through the first hardware interface layer, and the second frame buffer is composited through the second hardware interface layer. Finally, a composite interface may be displayed on the display apparatus of the electronic device.

In addition, during focus window switching, the electronic device may defocus an original focus window, and draw the defocused window in the second frame buffer. The new focus window may be started for the first time, or may be focused from a non-focus window. The new focus window may be drawn in the first frame buffer.

In this embodiment of this application, the focus window and the non-focus window are drawn separately. When lagging or frame loss occurs at the non-focus layer due to heavy drawing load, a drawing refresh rate of the focus window is not affected due to lagging at the non-focus layer. In this way, it can be ensured that the focus window is preferentially visible in a window rendering procedure, and occurrence of lagging and freezing of the focus window is reduced.

It should be understood that the application scenarios shown in FIG. 5(a) to FIG. 5(c) are merely examples for description, and should not be construed as a limitation on this application. The method 400 may be further applicable to an application scenario of another operating system (for example, a Linux system, an Android system, or an iOS system).

FIG. 6(a)-1, FIG. 6(a)-2, FIG. 6(b)-1, FIG. 6(b)-2, FIG. 6(c)-1, and FIG. 6(c)-2 are diagrams of independently drawing a focus layer and a non-focus layer at different frame rates according to an embodiment of this application;

In FIG. 6(a)-1, FIG. 6(a)-2, FIG. 6(b)-1, FIG. 6(b)-2, FIG. 6(c)-1, and FIG. 6(c)-2, FIG. 6(a)-1 and FIG. 6(a)-2 are an N^{th} frame of picture of a display apparatus, FIG. 6(b)-1 and FIG. 6(b)-2 are an (N+1)^{th} frame of picture of the display apparatus, and FIG. 6(c)-1, and FIG. 6(c)-2 are an (N+2)^{th} frame of picture of the display apparatus, where N is a positive integer.

When a window is composited by using the method 400, if lagging occurs at the second hardware interface layer in the (N+1)^{th} frame, no lagging occurs at the first hardware interface layer in the (N+1)^{th} frame. In this case, in the (N+1)^{th} frame, the electronic device may control, based on a frame composited by the second hardware interface layer in the N^{th} frame and a frame composited by the first hardware interface layer in the (N+1)^{th} frame, the display apparatus to display a composite picture (that is, a picture displayed by the display apparatus in the (N+1)^{th} frame). In the (N+2)^{th} frame, no lagging occurs at the second hardware interface layer, and the electronic device may control, based on a frame composited by the second hardware interface layer in the (N+2)^{th} frame and a frame composited by the first hardware interface layer in the (N+2)^{th} frame, the display apparatus to display a composite picture (that is, a picture displayed by the display apparatus in the (N+2)^{th} frame).

In this scenario, the first hardware interface layer may always perform rendering and composition at a high frame rate and full frame rate (for example, 60 FPS). When the second hardware interface layer cannot perform rendering and composition at a full rate, the first hardware interface layer is not synchronously blocked. In this way, the focus window and the non-focus window can be independently drawn at different frame rates, to ensure that the focus window is preferentially visible.

The foregoing describes the image display method provided in embodiments of this application. The following describes an apparatus and a device in embodiments of this application with reference to FIG. 7 and FIG. 8.

FIG. 7 is a diagram of an apparatus 700 according to an embodiment of this application. The apparatus 700 may include an obtaining unit 710, a storage unit 720, and a processing unit 730. The obtaining unit 710 is configured to obtain instructions and/or data. The obtaining unit 710 may also be referred to as a communication interface or a communication unit. The storage unit 720 is configured to: implement a corresponding storage function, and store corresponding instructions and/or data. The processing unit 730 may read the instructions and/or the data in the storage unit, to enable the apparatus 700 to implement the foregoing image display method or rendering method.

Optionally, the apparatus 700 further includes a transceiver unit, configured to receive/send instructions and/or data.

In a design, the apparatus 700 includes: the obtaining unit 710, configured to obtain a first window and a second window on a first interface, where the first window is a focus window, and the second window is a non-focus window; and the processing unit 730, configured to: draw the first window in a first frame buffer, and draw the second window in a second frame buffer, where the first window and the second window are drawn by a process of an operating system; composite the first frame buffer through a first hardware interface layer to obtain a first composite frame, and composite the second frame buffer through a second hardware interface layer to obtain a second composite frame; and control, based on the first composite frame and the second composite frame, a display apparatus to display a second interface.

In a possible implementation, the processing unit 730 is specifically configured to: composite the first frame buffer at a first frame rate through the first hardware interface layer, to obtain the first composite frame; composite the second frame buffer at a second frame rate through the second hardware interface layer, to obtain the second composite frame, where the second frame rate is less than or equal to the first frame rate.

In a possible implementation, the first composite frame includes a frame composited by the first hardware interface layer in an (N+1)^{th} frame, and the second composite frame includes a frame composited by the second hardware interface layer in an N^{th} frame, where N is a positive integer; and the processing unit 730 is specifically configured to: when a frame rate at which the second hardware interface layer performs composition is less than or equal to a preset threshold in the (N+1)^{th} frame, determine, based on the frame composited by the first hardware interface layer in the (N+1)^{th} frame and the frame composited by the second hardware interface layer in the N^{th} frame, the display apparatus to display the second interface.

In a possible implementation, the processing unit 730 is further configured to detect, on the first interface, a first input for the first window; and the obtaining unit 710 is specifically configured to obtain the first window and the second window in response to the first input.

In a possible implementation, the processing unit 730 is further configured to: detect, on the second interface, a second input for the second window; in response to the second input, draw the second window in the first frame buffer, and draw the first window in the second frame buffer; composite the first frame buffer through the first hardware interface layer to obtain a third composite frame, and composite the second frame buffer through the second hardware interface layer to obtain a fourth composite frame; and control, based on the third composite frame and the fourth composite frame, the display apparatus to display a third interface.

In a design, the apparatus 700 includes: the obtaining unit 710, configured to obtain first information sent by a CPU, where the first information includes a first window and a second window, the first window is a focus window, and the second window is a non-focus window; the processing unit 730, configured to: draw the first window in a first frame buffer, and draw the second window in a second frame buffer, where the first window and the second window are drawn by a process of an operating system; and the transceiver unit, configured to send data in the first frame buffer and the second frame buffer to a hardware composer.

Optionally, if the apparatus 700 is located in the electronic device 100, the processing unit 730 may be the processor 110 shown in FIG. 1.

FIG. 8 is a diagram of another apparatus 800 according to an embodiment of this application.

The apparatus 800 includes a memory 810, a processor 820, and a communication interface 830. The memory 810, the processor 820, and the communication interface 830 are connected to each other through an internal connection path. The memory 810 is configured to store instructions. The processor 820 is configured to execute the instructions stored in the memory 810, to control the communication interface 830 to obtain information, to enable the apparatus 800 to implement the foregoing image display method or rendering method. Optionally, the memory 810 may be coupled to the processor 820 through an interface, or may be integrated with the processor 820.

It should be noted that the communication interface 830 uses a transceiver apparatus, for example, but not limited to, a transceiver. The communication interface 830 may further include an input/output interface (input/output interface).

The processor 820 stores one or more computer programs, and the one or more computer programs include instructions. When the instructions are run by the processor 820, the apparatus 800 is enabled to perform the image display method or the rendering method in the foregoing embodiments.

In a possible implementation, the processor 820 includes a CPU and a GPU. The CPU is configured to obtain a first window and a second window on a first interface, where the first window is a focus window, and the second window is a non-focus window; the GPU is configured to: draw the first window in a first frame buffer, and draw the second window in a second frame buffer, where the first window and the second window are drawn by a process of an operating system; the CPU is configured to: control a hardware composer to composite the first frame buffer through a first hardware interface layer to obtain a first composite frame, and control the hardware composer to composite the second frame buffer through a second hardware interface layer to obtain a second composite frame; and the CPU is further configured to control, based on the first composite frame and the second composite frame, a display apparatus to display a second interface.

In a possible implementation, the processor 820 includes a GPU. The GPU is configured to: obtain first information sent by a CPU, where the first information includes a first window and a second window, the first window is a focus window, and the second window is a non-focus window; draw the first window in a first frame buffer, and draw the second window in a second frame buffer, where the first window and the second window are drawn by a process of an operating system; and send data in the first frame buffer and the second frame buffer to a hardware composer.

It should be understood that in this embodiment of this application, the processor may be a central control unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should also be understood that in this embodiment of this application, the memory may include a read-only memory and a random access memory, and provide instructions and data for the processor. A part of the processor may further include a non-volatile random access memory. For example, the processor may further store information of a device type.

In an implementation procedure, steps of the foregoing methods may be performed by using a hardware integrated logic circuit in the processor 820 or by using instructions in a form of software. The methods disclosed with reference to embodiments of this application may be directly performed by a hardware processor, or may be performed by using a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory 810. The processor 820 reads information in the memory 810, and performs the steps of the foregoing methods in combination with the hardware of the processor. To avoid repetition, details are not described herein again.

Optionally, the communication interface 830 in FIG. 8 may implement the obtaining unit 710 in FIG. 7, the memory 810 in FIG. 8 may implement the storage unit 720 in FIG. 7, and the processor 820 in FIG. 8 may implement the processing unit 730 in FIG. 7.

Optionally, the apparatus 700 or the apparatus 800 may be located in the electronic device 100 in FIG. 1.

An embodiment of this application further provides a computer-readable storage medium. The computer-readable storage medium stores program code, and when the computer program code is run on a computer, the computer is enabled to perform any one of the methods in FIG. 4 to FIG. 6(a)-1, FIG. 6(a)-2, FIG. 6(b)-1, FIG. 6(b)-2, FIG. 6(c)-1, and FIG. 6(c)-2.

An embodiment of this application further provides a computer program product. The computer product includes a computer program. When the computer program is run, a computer is enabled to perform any one of the methods in FIG. 4 to FIG. 6(a)-1, FIG. 6(a)-2, FIG. 6(b)-1, FIG. 6(b)-2, FIG. 6(c)-1, and FIG. 6(c)-2.

An embodiment of this application further provides a chip, including a circuit. The circuit is configured to perform any one of the methods in FIG. 4 to FIG. 6(a)-1, FIG. 6(a)-2, FIG. 6(b)-1, FIG. 6(b)-2, FIG. 6(c)-1, and FIG. 6(c)-2.

Optionally, the chip may include one or more of a CPU chip, a GPU chip, an ASIC chip, and an NPU chip.

An embodiment of this application further provides an electronic device, including any image display apparatus or rendering apparatus shown in FIG. 7 or FIG. 8.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working procedure of the foregoing system, apparatus, and unit, refer to a corresponding procedure in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image display method, wherein the method comprises:
obtaining a first window and a second window on a first interface, wherein the first window is a focus window, and the second window is a non-focus window;
drawing the first window in a first frame buffer, and drawing the second window in a second frame buffer, wherein the first window and the second window are drawn by a process of an operating system;
compositing the first frame buffer through a first hardware interface layer to obtain a first composite frame, and compositing the second frame buffer through a second hardware interface layer to obtain a second composite frame; and
controlling, based on the first composite frame and the second composite frame, a display apparatus to display a second interface.

2. The method according to claim 1, wherein compositing the first frame buffer through the first hardware interface layer to obtain the first composite frame, and compositing the second frame buffer through the second hardware interface layer to obtain the second composite frame comprise:
compositing the first frame buffer at a first frame rate through the first hardware interface layer, to obtain the first composite frame; and
compositing the second frame buffer at a second frame rate through the second hardware interface layer, to obtain the second composite frame, wherein the second frame rate is less than or equal to the first frame rate.

3. The method according to claim 1 or 2, wherein the first composite frame comprises a frame composited by the first hardware interface layer in an (N+1)^{th} frame, and the second composite frame comprises a frame composited by the second hardware interface layer in an N^{th} frame, wherein N is a positive integer; and
controlling, based on the first composite frame and the second composite frame, the display apparatus to display the second interface comprises:
when a frame rate at which the second hardware interface layer performs composition in the (N+1)^{th} frame is less than or equal to a preset threshold, controlling, based on the frame composited by the first hardware interface layer in the (N+1)^{th} frame and the frame composited by the second hardware interface layer in the N^{th} frame, the display apparatus to display the second interface.

4. The method according to any one of claims 1 to 3, wherein obtaining the first window and the second window on the first interface comprises:
detecting, on the first interface, a first input for the first window; and
obtaining the first window and the second window in response to the first input.

5. The method according to any one of claims 1 to 4, wherein the method further comprises:
detecting, on the second interface, a second input for the second window;
in response to the second input, drawing the second window in the first frame buffer, and drawing the first window in the second frame buffer;
compositing the first frame buffer through the first hardware interface layer to obtain a third composite frame, and compositing the second frame buffer through the second hardware interface layer to obtain a fourth composite frame; and
controlling, based on the third composite frame and the fourth composite frame, the display apparatus to display a third interface.

6. An image display apparatus, wherein the apparatus comprises:
an obtaining unit, configured to obtain a first window and a second window on a first interface, wherein the first window is a focus window, and the second window is a non-focus window; and
a processing unit, configured to:
draw the first window in a first frame buffer, and draw the second window in a second frame buffer, wherein the first window and the second window are drawn by a process of an operating system;
composite the first frame buffer through a first hardware interface layer to obtain a first composite frame, and composite the second frame buffer through a second hardware interface layer to obtain a second composite frame; and
control, based on the first composite frame and the second composite frame, a display apparatus to display a second interface.

7. The apparatus according to claim 6, wherein
the processing unit is specifically configured to:
composite the first frame buffer at a first frame rate through the first hardware interface layer, to obtain the first composite frame; and
composite the second frame buffer at a second frame rate through the second hardware interface layer, to obtain the second composite frame, wherein the second frame rate is less than or equal to the first frame rate.

8. The apparatus according to claim 6 or 7, wherein the first composite frame comprises a frame composited by the first hardware interface layer in an (N+1)^{th} frame, and the second composite frame comprises a frame composited by the second hardware interface layer in an N^{th} frame, wherein N is a positive integer; and
the processing unit is specifically configured to: when a frame rate at which the second hardware interface layer performs composition in the (N+1)^{th} frame is less than or equal to a preset threshold, control, based on the frame composited by the first hardware interface layer in the (N+1)^{th} frame and the frame composited by the second hardware interface layer in the N^{th} frame, the display apparatus to display the second interface.

9. The apparatus according to any one of claims 6 to 8, wherein
the processing unit is further configured to detect, on the first interface, a first input for the first window; and
the obtaining unit is specifically configured to obtain the first window and the second window in response to the first input.

10. The apparatus according to any one of claims 6 to 9, wherein
the processing unit is further configured to:
detect, on the second interface, a second input for the second window;
in response to the second input, draw the second window in the first frame buffer, and draw the first window in the second frame buffer; and
composite the first frame buffer through the first hardware interface layer to obtain a third composite frame, and composite the second frame buffer through the second hardware interface layer to obtain a fourth composite frame; and control, based on the third composite frame and the fourth composite frame, the display apparatus to display a third interface.

11. An image display apparatus, comprising a processor and a memory, wherein the processor is coupled to the memory, and is configured to read and execute instructions in the memory, to perform the method according to any one of claims 1 to 5.

12. A computer-readable storage medium, wherein the computer-readable storage medium stores program code, and when the computer program code is run on a computer, the computer is enabled to perform the method according to any one of claims 1 to 5.

13. A chip, comprising a circuit, wherein the circuit is configured to perform the method according to any one of claims 1 to 5.

14. An electronic device, comprising the image display apparatus according to any one of claims 6 to 11.
